# EUROPEAN PATENT SPECIFICATION

(11) **EP 1 394 032 B1**
(45) Date of publication and mention of the grant of the patent: **05.01.2005**
(21) Application number: 03077730.4
(22) Date of filing: 01.09.2003
(51) Int. Cl.: B62K 21/16

(54) **Coupling piece, bicycle steering unit and bicycle**
Kupplungsteil, Fahrradlenkervorbau und Fahrrad
Pièce d'accouplement, potence de bicyclette et bicyclette

(30) Priority: 01.09.2002 NL 1021369
(43) Date of publication of application: 03.03.2004
(73) Proprietor: Batavus B.V., 8444 AR Heerenveen (NL)
(72) Inventor: Naberman, André, 8281 MW Genemuiden (NL)
(74) Representative: Prins, Adrianus Willem, Mr. Ir.

(56) References cited:
- DE-U- 20 205 492
- NL-C- 1 000 014
- NL-C- 1 001 155

## Description

The invention relates to a coupling piece according to the preamble of claim 1.

Such a coupling piece is known from Netherlands patent application 1 000 014. This coupling piece comprises an elongated body having at one end a strap connectible with a bicycle handlebar and at another end a strap connectible with a bush fastened to a bicycle fork. The straps can be tensioned and released again by a tensioning mechanism. The tensioning mechanism is equipped with tensioning elements connected with the straps and operating means for tightening the tensioning elements, as a result of which the straps are tightened. The operating means are composed of a handle which, with an eccentric, is rotatably connected with the tensioning element. For each of both straps, the tensioning mechanism comprises a tensioning rod with a nut with which the rod engages the respective strap. The tensioning rods are connected to each other via a plate, which plate is coupled with the eccentric by means of a pulling rod extending through the coupling piece. Both tensioning rods extend through the free ends of the straps. By moving, with the operating mechanism, the plate away from the straps, the ends of the straps are pulled toward each other, as a result of which the straps are tightened.

A drawback of this known suspension is that a great force is required to tighten straps so taut that the fixation of the coupling piece relative to the stem and of a handlebar relative to the coupling piece is secured in a sufficiently reliable manner.

It is an object of the invention to provide an improved coupling piece and in particular a coupling piece with which, with less force, the body can be fixed relative to the stem and the handlebar, but with which yet a sufficiently great movement range is provided to secure, also in the released position of the straps, easy movability of the coupling piece relative to the stem and of the handlebar relative to the coupling piece. To this end, the invention provides a coupling piece according to claim 1. The invention may also be embodied in a bicycle steering unit according to claim 15 and in a bicycle according to claim 16.

Through the fact that in the clamping condition the ends of the arms located closest to each other are located closer to a line through the engaging positions than in the releasing position, the retardation between movement of the ends of the arms located closest to each other transverse to the line passing through the engaging positions and movement of the ends of the arms located remote from each other along the mentioned line passing through said engaging positions is increased according as the holders are clamped further. As a result thereof, with a given operating force with which the ends of the arms located closest to each other are moved transversely to the line through the engaging positions, an increasingly greater force. can be exerted on the holders for clamping the handlebar and the fastening element according as the clamping condition is approached and more force is required to tension the holders further. Conversely, at a given operating movement of the ends of the arms located closest to each other, the holders move transversely to the line through the engaging points of the arms on the holders, the holders move over an increasingly greater distance according as the arms are brought farther from the clamping condition to the releasing position. In spite of the great retardation in the transmission formed by the arms near the clamping condition, thus yet a sufficiently great operating stroke is provided in the area of the engaging points on the holders to be able to detension the holders sufficiently far.

Specific examples of embodiments of the invention are laid down in the dependent claims.

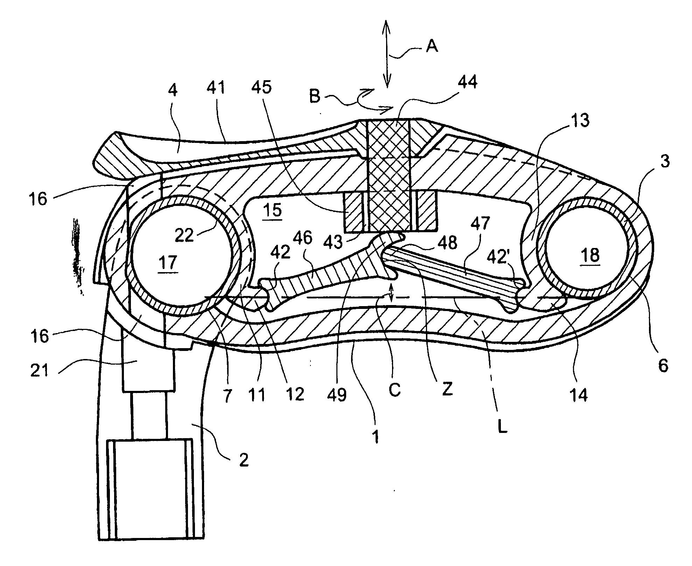

Further aspects, effects and details of the invention are discussed below on the basis of examples shown in the drawing.

The drawing shows a view in cross-section of an example of an embodiment of a coupling piece according to the invention in a fixed condition.

The shown coupling piece comprises a body 1 with a chamber 15 between a handlebar holder 6 and a stem holder 7. With the handlebar holder, a handlebar 3 is fixed relative to the body. In the stem holder 7, a fastening element 2 (according to this example in the form of a stem) is fixed relative to the body 1. By means of a, known per se, construction, the stem 2 can be fastened to a head part of a front fork. The stem 2 and the body 1 are provided with recesses 21 and 16, respectively, whereby an expander bolt (not shown) for clamping the stem in an upper part of a front fork can be reached. The handlebar 3, the stem 2 and the coupling piece together form a bicycle steering unit.

In the shown example, the stem 2 is pivotably connected with the body 1 of the coupling piece by means of a journal 22 of the stem 2, which is located in the stem holder 7. In use, the handlebar 3 is located at a distance from the journal 22, in the shown example through the fact that the handlebar holder 6 and the stem holder 7 are located at a distance from each other. In the released condition, the stem 2 and the coupling piece can thus be pivoted, as a result of which the position and orientation of the handlebar 3 are adjustable relative to the stem 2, and can then be fixed.

The coupling piece has an operating structure 4 for fixing and releasing the holders 6, 7 and hence fixing and releasing the stem 2 and the handlebar 3. According to the shown example, the operating structure 4 comprises a first arm 46 and a second arm 47, the ends of which located closest to each other are pivotably coupled together in a pivoting point Z. An end of the first arm 46 located distal from the second arm engages the stem holder 7. An end of the second arm 47 engages the handlebar holder 6. The arms 46, 47 can be pivoted in the pivoting point so as to fix and release the holders. During pivoting, the pivoting point Z moves in the direction of the arrow C, transversely to the line L through the engaging points of the arms 46, 47 on the holders 6, 7. In the releasing condition, the pivoting point Z is located farther from the line L than in the clamping condition. According as the holders 6, 7 are fixed further, the force which the arms 46, 47 can exert on the holders at a given exertion of force in the direction of the arrow C toward the line L becomes increasingly greater. Consequently, relatively little force is required to operate the holders 6, 7 via the operating structure 4.

In the shown example, the pivoting point Z is located at an equal distance from the two holders 6, 7, as a result of which a similar force is exerted on the two holders. If desired, the pivoting point Z may be placed closer to one of the holders 6, 7, for instance to compensate for a heavier mechanical load of one of the holders.

The shown handlebar holder 6 and stem holder 7 are each designed as a clamping element which engages one of the arms 46, 47. More in particular, the holders 6, 7 are designed as straps, and the holders 6, 7 each have respectively a free end 11 and 13, respectively, on which the respective arms 46 and 47-exert a pushing force when bringing the holders 6, 7 from the releasing condition into the fixed condition. Through the pushing force, the free end 11, 13 moves relative to the rest of the holders 6, 7. The two free ends 11, 13 and the arms 46, 47 are coupled to each other by means of joints. In the shown example, the joints each comprise a rounded thickening 12, 14 at an end 11, 13 of the respective holder 6, 7 and a recess 42, 42' at an end of the arm 46, 47. The rounding of the thickening 12, 14 is located at least partly in the associated recess 42, 42'. Through the joints formed by roundings and recesses engaged by the roundings, the shown operating structure is easy and inexpensive to manufacture and is very robust, because a direct transmission of force is obtained without intervention of hinges with journals and bearings of the journals.

In the shown example, the holders form an integral part of the body 1. Consequently, the shown coupling piece has few separate parts. The holders 6, 7 connect to the chamber 15, and the spaces 17, 18 are separated from the chamber 15 by the free ends 11, 13. The spaces 17, 18 communicate with the chamber 15 through a passage between the free ends 11, 13 and the body 1. The arms 46, 47 are thus present in an enclosed space formed by the chamber 15 and the spaces 17, 18 for receiving parts of the handlebar 3 and the stem 2, as a result of which the whole of holders and arms 46, 47 is protected against influences from outside, and a stable, rigid structure is obtained. According to the shown example, the roundings at the ends of the free ends 11, 13 of the holders 6, 7 are designed as a projection 12, 14 at the respective end near the passage between the spaces 17, 18 and the chamber 15.

. The arms 46, 47 of the operating structure together form a knee lever mechanism and are pivotable relative to each other in a knee joint 48, 49, which forms the pivoting point Z. The arm 46 has a recess 49, which engages a rounded end 48 of the other arm 47. Through the knee joint, the operating structure 4 is easy and also inexpensive to manufacture and is also a robust structure with direct transmission of force.

It is also possible, however, to design one or more of the joints differently, for instance as a hinge structure with pins and bearings.

In the shown example, the arms 46, 47 can be pivoted by a pushing element in the form of a pin 44, which engages the arms 46, 47 in the pivoting point Z, as a result of which the pivoting point Z is moved. In the shown example, the pin 44 extends through a passage through the body 1 and through a nut 45. The pin 44 is movable in a direction of the arrow A. The pin 44 and the part of the passage located in the nut 45 are provided with a thread 43, which forms a translation-rotation guiding structure for converting a rotation movement of the pin in the direction B into a translation movement in the direction A from or to the pivoting point Z. In the shown example, the nut 45 is provided with the thread 43, as a result of which the actual body 1, which is preferably manufactured from light metal, need not be provided with the thread. In principle, however, it is possible to provide the recess in the body itself with a thread and to optionally omit the nut. The guiding structure may also be designed differently, for instance as a cam and a thread-shaped cam path cooperating therewith. Also other provisions for operating the pressure element 44, such as an eccentric, may be used.

The operating structure 4 further comprises a handle 41, which is rotatable about an axis of rotation parallel to the movement direction A, and according to this example about the center line of the pin 44, as indicated by the arrow B. Through the fact that this axis of rotation extends transversely through the body 1, and in particular perpendicularly to the upper surface of the body 1, the handle 41 can rotate along a path which does not intersect the body 1. As a result thereof, the handle can make a great stroke and rotate, for instance, through 180° or more.

According to the shown example, the handle 41 is somewhat recessed in the body 1, and the rotation is limited to slightly below 180°, but, if desired, the handle 41 may be located completely above the surface and then even rotate through 360°. Such a handle may also advantageously be used as part of coupling structures with another transmission of the force exerted by the handle to the holders, because also then the available operating range of the handle makes possible a great retardation in the transmission at a sufficiently great effective movement range of the holders. In combination with the variable retardation in the transmission of force obtained with the proposed coupling piece, the handle rotatable about an axis transverse through the body 1, and in particular perpendicular to the upper surface of the body 1, is very advantageous, however, because an operation with a relatively constant force over a great angular range can be simply realized therewith.

With the handle 41, the pin 44 can be moved. To this end, the handle 41 is firmly connected with the pin 44, and the center line of the pin 44 also forms the axis of rotation of the handle 41. During rotation of the handle 41 in the rotational sense B, the pin 44 will move through the thread 43 in the direction A, with the result that the pin more or less presses on the knee lever assembly. The pin 44 is shown in the extreme position in which the holders are tensioned to clamp the handlebar 6 and the stem 2. During rotation of the handle 41, and therefore the pin 44, to the releasing condition, the pin 44 will move upward and slightly sink into the nut 45. The joint 48, 49 of the knee lever assembly then also moves upward, because at the ends 42, 42' a force is exerted by the free ends 11, 13 of the strap-shaped holders 6, 7. In the shown example, the pin 44 is not connected with the knee lever, but the pin only exerts a force on the lever, and vice versa. It is also possible, however, to couple the pin to the pivoting point in another manner, for instance by rotatably connecting the pin with one of the arms 46, 47 in the pivoting point Z and taking the pin along when moving the respective arm.

The invention as laid down in the claims is not limited to the above-described examples. After perusal of the foregoing, it will be clear to those skilled in the art that within this framework different other variants are conceivable. Thus, for instance, it is possible to position the axis of rotation of the handle differently and to place, for instance, the handle such that it is rotatable in a plane on the side of the coupling piece. For instance, in the shown example, the handle may rotate in a plane parallel to the plane of cross-section of the drawing and move the pivoting point with, for instance, a cam placed eccentrically to the axis of rotation.

The word 'comprising' does not exclude that one or more other elements than those mentioned are present.

## Claims

1. A coupling piece for a bicycle steering unit, comprising:
a body (1; 11-18) provided with a first holder (6) for fixing a handlebar (3) relative to the body and a second holder (7) for fixing relative to the body a fastening element (2) fastenable to a head part of a front fork; and
an operating structure (4, 41-49) for fixing and releasing the holders, comprising a first arm (46) and a second arm (47) which are pivotably coupled with each other in an area between the holders (6, 7);
which first arm engages the first holder (6) in a first engaging position, and which second arm engages the second holder (7) in a second engaging position, and which arms (46, 47) are movable between a releasing condition in which the holders (6, 7) are released and a clamping condition in which the holders (6, 7) are tensioned,
**characterized in that** in the clamping condition the ends of the arms (46, 47) located closest to each other are located closer to a line (L) passing through said engaging positions than in the releasing condition.

2. A coupling piece according to claim 1, wherein the holders (6, 7) each comprise a clamping element engaged by the respective arm (46, 47) to clamp the fastening element (2) and the handlebar (3), respectively, in the fixed position.

3. A coupling piece according to claim 2, wherein the clamping elements are each strap-shaped with a free end (11; 13) on which the arm (46; 47) engaging the respective holder exerts a pushing force, at least when bringing the holders from the releasing condition to the clamping condition.

4. A coupling piece according to claim 3, wherein the free end (11; 13) of at least one of the clamping elements and the arm (46; 47) engaging it engage each other in a joint (12, 42; 14, 42').

5. A coupling piece according to claim 4, wherein the joint comprises a rounding (12, 14) and a recess (42, 42'), which rounding (12, 14) engages the recess (42, 42').

6. A coupling piece according to any one of the preceding claims, wherein the arms (46, 47) form a knee joint assembly and are pivotably positioned relative to each other in a knee joint (48, 49).

7. A coupling piece according to any one of the preceding claims, wherein the operating structure (4, 41-49) further comprises:
a pushing element (44) engaging the arms (46,47) and capable of pivoting the arms, as a result of which the ends of the arms located closest to each other are moved relative to the line through the engaging positions.

8. A coupling piece according to claim 7,wherein the pushing element (44) extends at least partly through a recess in the body (1) and at least partly is of mainly cylindrical design, and the pushing element (44) and the recess are provided with a translation-rotation guiding structure (43) for converting a rotation movement of the pin into an axial movement of the pin in the direction of the line through the engaging positions.

9. A coupling piece according to claim 8, wherein the guiding structure (43) comprises a first thread in the recess and a second thread on the pushing element (44) cooperating with the first thread.

10. A coupling piece according to any one of the preceding claims, wherein the operating structure (4, 41-49) comprises a handle (41) rotatable about an axis, which axis extends through the body (1).

11. A coupling piece according to claim 10 and any one of claims 7-9, wherein the handle (41) is coupled to the pushing element (44) for operating the movement of the pushing element.

12. A coupling piece according to claim 11, wherein the handle (41) is firmly connected with the pushing element (44).

13. A coupling piece according to any one of the preceding claims, wherein the body (1) comprises a chamber (15) in which the arms (46, 47) and the holders (6, 7) are located.

14. A coupling piece according to claim 13, wherein the holders (6, 7) form an integral part of the body (1).

15. A bicycle steering unit, comprising:
a coupling piece according to any one of the preceding claims;
a bicycle handlebar (3) mounted in the first holder, and
a fastening element (2) mounted in the second holder.

16. A bicycle, provided with a bicycle steering unit according to claim 15.

## Patentansprüche

1. Kupplungsteil für einen Fahrradlenkervorbau, mit:
einem Gehäuse (1, 11-18), das mit einem ersten Halter (6) zum Fixieren einer Lenkstange (3) relativ zu dem Gehäuse und mit einem zweiten Halter (7) zum Fixieren eines mit einem Kopfteil einer Vordergabel verbindbaren Befestigungselementes (2) relativ zu dem Gehäuse versehen ist, und
einer Bedienungsstruktur (4, 41-49) zum Fixieren und Lösen der Halter, wobei die Bedienungsstruktur einen ersten Arm (46) und einen zweiten Arm (47) aufweist, die schwenkbar in einem Gebiet zwischen den Haltern (6, 7) miteinander verbunden sind,
wobei der erste Arm an dem ersten Halter (6) an einer ersten Angriffsposition angreift und wobei der zweite Arm an dem zweiten Halter (7) an einer zweiten Angriffsposition angreift, und wobei die Arme (46, 47) zwischen einer lösenden Stellung, in der die Halter (6, 7) gelöst sind, und einer klemmenden Stellung beweglich sind, in der die Halter (6, 7) angespannt sind,
**dadurch gekennzeichnet, dass** in der klemmenden Stellung die einander am nächsten liegenden Enden der Arme (46, 47) näher an einer Linie (L), die durch die Angriffspositionen verläuft, liegen als in der lösenden Stellung.

2. Kupplungsteil nach Anspruch 1, wobei die Halter (6, 7) jeweils ein Klemmelement aufweisen, an dem ein entsprechender Arm (46, 47) angreift, um das Befestigungselement (2) bzw. die Lenkstange (3) in der fixierten Position einzuklemmen.

3. Kupplungsteil nach Anspruch 2, wobei die Klemmelemente jeweils laschenförmig mit einem freien Ende (11; 13) sind, auf das der am an dem jeweiligen Halter angreifende Arm (46; 47) eine Druckkraft ausübt, zumindest wenn die Halter aus der lösenden Stellung in die klemmende Stellung gebracht werden.

4. Kupplungsteil nach Anspruch 3, wobei das freie Ende (11; 13) von wenigstens einem der Klemmelemente und der daran angreifende Arm (46; 47) in einem Gelenk (12, 42; 14, 42') ineinandergreifen.

5. Kupplungsteil nach Anspruch 4, wobei das Gelenk eine Abrundung (12, 14) und eine Ausnehmung (42, 42') aufweist, wobei die Abrundung (12, 14) in der Ausnehmung (42, 42') eingreift.

6. Kupplungsteil nach einem der vorhergehenden Ansprüche, wobei die Arme (46, 47) eine Kniegelenkanordnung bilden und an einem Kniegelenk (48, 49) relativ zueinander schwenkbar positioniert sind.

7. Kupplungsteil nach einem der vorhergehenden Ansprüche, wobei die Bedienungsstruktur (4, 41-49) weiter aufweist:
ein Druckelement (44), das an den Armen (46, 47) angreift und in der Lage ist, die Arme zu schwenken, woraufhin die Enden der Arme, die einander am nächsten liegen, relativ zu der Linie durch die Angriffspositionen bewegt werden.

8. Kupplungsteil nach Anspruch 7, wobei das Druckelement (44) wenigstens teilweise durch eine Ausnehmung in dem Gehäuse (1) verläuft und wenigstens teilweise eine hauptsächlich zylindrische Gestalt hat, und wobei das Druckelement (44) und die Ausnehmung mit einer Translations-Rotations-Führungsstruktur (43) versehen sind, um eine Drehbewegung des Stiftes in eine axiale Bewegung des Stiftes in die Richtung der Linie zwischen den Angriffspositionen umzuwandeln.

9. Kupplungsteil nach Anspruch 8, wobei die Führungsstruktur (43) ein erstes Gewinde in der Ausnehmung und ein zweites Gewinde an dem Druckelement (44) aufweist, das mit dem ersten Gewinde zusammenwirkt.

10. Kupplungsteil nach einem der vorhergehenden Ansprüche, wobei die Bedienungsstruktur (4, 41-49) einen Griff (41) aufweist, der um eine Achse drehbar ist, wobei die Achse durch das Gehäuse (1) verläuft.

11. Kupplungsteil nach Anspruch 10 und einem der Ansprüche 7-9, wobei der Griff (41) mit dem Druckelement (44) verbunden ist, um die Bewegung des Druckelements auszuführen.

12. Kupplungsteil nach Anspruch 11, wobei der Griff (41) fest mit dem Druckelement (44) verbunden ist.

13. Kupplungsteil nach einem der vorhergehenden Ansprüche, wobei das Gehäuse (1) eine Kammer (15) aufweist, in der die Arme (46, 47) und die Halter (6, 7) angeordnet sind.

14. Kupplungsteil nach Anspruch 13, wobei die Halter (6, 7) einen integralen Bestandteil des Gehäuses (1) bilden.

15. Fahrradlenkervorbau, mit:
einem Kupplungsteil nach einem der vorhergehenden Ansprüche,
einer Fahrradlenkstange (3), die in dem ersten Halter montiert ist, und
einem Befestigungselement (2), das in dem zweiten Halter montiert ist.

16. Fahrrad, das mit einem Fahrradlenkervorbau nach Anspruch 15 versehen ist.

## Revendications

1. Pièce d'accouplement pour une unité de direction de bicyclette, comprenant :
un corps (1, 11-18) muni d'un premier organe de maintien (6) afin de fixer un guidon (3) par rapport au corps et un second organe de maintien (7) afin de fixer par rapport au corps un élément de fixation (2) qui peut être fixé sur une partie de tête d'une fourche avant ; et
une structure de commande (4, 41-49) afin de bloquer (fixer) et de débloquer (libérer) les organes de maintien, comprenant un premier bras (46) et un second bras (47) qui sont reliés l'un à l'autre de manière à pouvoir pivoter dans un espace situé entre les organes de maintien (6, 7) ;
lequel premier bras s'engage vis-à-vis du premier organe de maintien (6) dans une première position d'engagement, et lequel second bras s'engage vis-à-vis du second organe de maintien (7) dans une seconde position d'engagement, et lesquels bras (46, 47) sont mobiles entre une position de déblocage dans laquelle les organes de maintien (6, 7) sont débloqués et une position de blocage dans lesquels les organes de maintien (6, 7) sont bloqués,
**caractérisée en ce que**, dans la position de blocage, les extrémités des bras (46, 47) situées le plus près l'une de l'autre se rapprochent plus d'une ligne (L) qui passe par lesdites positions d'engagement que dans la position de déblocage.

2. Pièce d'accouplement selon la revendication 1, dans laquelle les organes de maintien (6, 7) comprennent chacun un élément de blocage mis en prise par le bras respectif (46, 47) afin de bloquer l'élément de fixation (2) et le guidon (3), respectivement, dans la position fixée.

3. Pièce d'accouplement selon la revendication 2, dans laquelle les éléments de blocage ont chacun une forme de sangle munie d'une extrémité libre (11 ; 13) sur laquelle le bras (46; 47) s'engageant vis-à-vis de l'organe de maintien respectif exerce une force de compression, au moins lorsque les organes de maintien passent de la position de déblocage à la position de blocage.

4. Pièce d'accouplement selon la revendication 3, dans laquelle l'extrémité libre (11 ; 13) d'au moins un des éléments de blocage et le bras (46 ; 47) le mettant en prise, s'engagent l'un dans l'autre par une articulation (12, 42 ; 14, 42').

5. Pièce d'accouplement selon la revendication 4, dans laquelle l'articulation comprend une sphère (12, 14) et un évidemment (42, 42'), laquelle sphère (12, 14) s'engage dans la cavité (42, 42').

6. Pièce d'accouplement selon l'une quelconque des revendications précédentes, dans laquelle les bras (46, 47) forment un ensemble d'articulations à rotule et sont positionnés de manière à pouvoir pivoter l'un par rapport l'autre par une articulation à rotule (48, 49).

7. Pièce d'accouplement selon l'une quelconque des revendications précédentes, dans laquelle la structure de commande (4, 41-49) comprend en outre :
un élément de compression (44) mettant en prise les bras (46, 47) et capable de faire pivoter les bras, à la suite de quoi les extrémités des bras situées le plus près l'une de l'autre sont déplacées en direction de la ligne passant par les positions d'engagement.

8. Pièce d'accouplement selon la revendication 7, dans laquelle l'élément de compression (44) traverse au moins en partie un évidemment dans le corps (1) et est au moins en partie conçu principalement de manière cylindrique, et l'élément de compression (44) ainsi que la cavité sont munis d'une structure de guidage de translation-rotation (43) afin de convertir un mouvement de rotation de l'axe en un mouvement axial en direction de la ligne passant par les positions d'engagement.

9. Pièce d'accouplement selon la revendication 8, dans laquelle le système de guidage (43) comprend un premier filetage dans la cavité et un second filetage sur l'élément de compression (44) s'accouplant au premier filetage.

10. Pièce d'accouplement selon l'une quelconque des revendications précédentes, dans laquelle la structure de commande (4, 41-49) comprend une poignée (41) montée tournant autour d'un axe, lequel axe traverse le corps(1).

11. Pièce d'accouplement selon la revendication 10 et l'une quelconque des revendications 7 à 9, dans laquelle la poignée (41) est reliée à l'élément de compression (44) afin de commander le mouvement de l'élément de compression.

12. Pièce d'accouplement selon la revendication 11, dans laquelle la poignée (41) est solidement reliée à l'élément de compression (44).

13. Pièce d'accouplement selon l'une quelconque des revendications précédentes, dans laquelle le corps (1) comprend une chambre (15) dans laquelle sont situés les bras (46, 47) ainsi que les organes de maintien (6, 7).

14. Pièce d'accouplement selon la revendication 13, dans laquelle les organes de maintien (6, 7) forment une partie intégrante du corps (1).

15. Unité de direction de bicyclette, comprenant :
une pièce d'accouplement selon l'une quelconque des revendications précédentes ;
un guidon de bicyclette (3) monté sur le premier logement, et
un élément de fixation (2) monté sur le second logement.

16. Bicyclette, munie d'une unité de direction selon la revendication 15.
